Europäisches Patentamt

European Patent Office

Office européen des brevets

Publication number: **0 285 709**
**A1**

# EUROPEAN PATENT APPLICATION

Application number: 87200645.7

Date of filing: 06.04.87

Int. Cl.⁴ **A23G 9/28** , **B65D 85/78** , **B65D 83/00**

Date of publication of application:
**12.10.88 Bulletin 88/41**

Designated Contracting States:
**AT BE CH DE ES FR GB GR IT LI NL SE**

Applicant: **BRAVO S.p.A.**
**Via Lago di Molveno, 4**
**I-36100 Vicenza(IT)**

Inventor: **Bravo, Francesco**
**Via Parini, 1**
**I-36075 Montecchio Maggiore (Vicenza)(IT)**

Representative: **Martegani, Franco et al**
**Ingg. GUZZI e RAVIZZA S.r.l. Via Boccaccio, 24**
**I-20123 Milano(IT)**

Ice-cream dispenser employing ice-cream cartridge.

An ice-cream dispenser comprises at least a refrigerated chamber closed by a door (13) with a delivery tap (15). which chamber is adapted to house in a removable manner a cartridge of ice-cream consisting of a container holding an amount of ice-cream on which pressor means (17) act so as to dispense a dose of ice-cream through the outlet (16) of said delivery tap.

EP 0 285 709 A1

# Fig.1

## ICE-CREAM DISPENSER EMPLOYING ICE-CREAM CARTRIDGE

The present invention relates to an ice-cream dispenser with the interesting characteristics of operating with the use of a replaceable (disposable) and or refillable ice-cream cartridge.

As is well-known to persons with ordinary skill in the art. there are basically two types of ice-cream: industrial and own-made ice-cream (the latter known also as Italian-type ice-cream).

Industrial ice-cream is prepared and packaged in large quantities and distributed to the different sales-points where the single packages are stored in refrigerators. sometimes for long periods of time.

Industrial ice-cream has therefore to be prepared with the use of long-life. low degradation basic ingredients and with the addition of preserving agents. which have an adverse effect on the quality of the product which is in consequence a somewhat poor-quality product.

On the other hand, for commercial distributors industrial ice-cream has certain advantages. namely contained cost, and no need for machines or personnel with specific knowledge of production processes. but solely a refrigerator for storing the different packages, which require only a minimal time for distribution.

The quality of own-made ice-cream is far superior to that of the industrial kind; however, it has to be prepared at the sales-point by expert personnel using special machinery and its cost is therefore high.

The variously-flavoured ice-cream is placed into vessels and stored for a short time in compartmented refrigerated counters (show cases) from which it is taken-off and used to prepare cones or cornets and tubs of ice-cream. etc.

The object of the present invention is to embody an ice-cream dispenser that combines the advantages both of industrial and own-made Italian-type ice-cream, and at the same time does away with their disadvantages.

To attain this object. the invention according to the present application embodies an ice-cream dispenser of the type comprising at least a refrigerated chamber closed by a door with a delivery tap. wherein the said chamber is adapted to house in a removable manner an ice-cream cartridge holding a certain amount of ice-cream on which act pressor means adapted to dispense a dose of ice-cream through the opening of the said delivery tap

The said cartridge can be of the disposable type or of the recoverable and refillable type.

The structural and functional characteristics of the invention, and its advantages, will become more apparent from an examination of the following description. referred to the appended drawings illustrating different practical embodiments of the invention itself.

In the drawings:

Figure 1 is a longitudinal section illustrating a dispenser employing an ice-cream cartridge. in the operating condition:

Figure 2 is an exploded longitudinal sectional view showing the step of placing and ice-cream cartridge into the housing-space of the dispensing chamber:

Figures 3 and 4 are views as in Figures 1 and 2. but illustrating a second form of embodiment of the invention:

Figures 5 and 6 are views as in Figures 1 and 2. but illustrating a third form of embodiment of the invention:

Figures 7 and 8 are views as in Figures 1 and 2. but illustrating a fourth form of embodiment of the invention:

Figures 9 and 10 are views as in Figures 1 and 2. but illustrating a fifth form of embodiment of the invention: and

Figures 11 and 12 are views as in Figures 1 and 2. but illustrating a sixth form of embodiment of the invention.

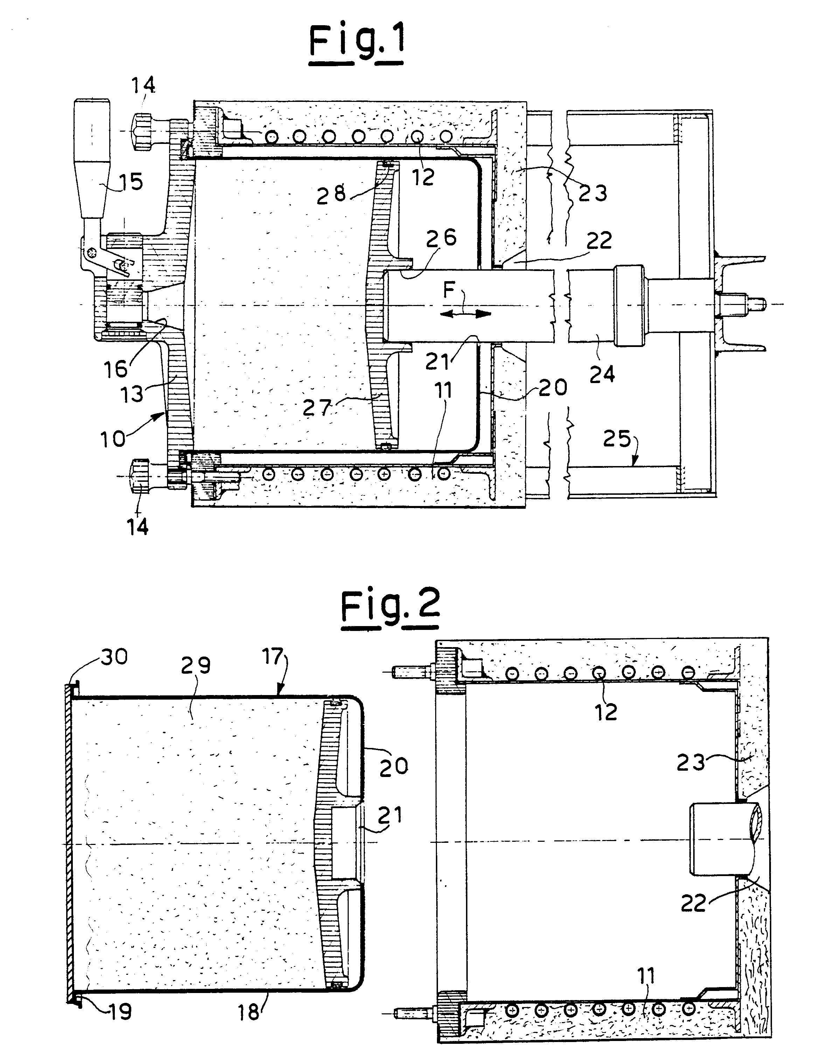

With reference to Figures 1 and 2 of the drawings. in accordance with a first possible form of embodiment of the invention the dispenser in question is indicated overall by 10 and consists structurally of an insulated chamber 11. for example cylindrical in shape. suitably cooled by means of any known kind of refrigerating circuit. the cooling coil of which is indicated by 12.

Said cylindrical chamber 11 features. proximal to a base, a door 13 applied by screws 14 in a removable manner.

Said door 13 is of a type well-known to persons with ordinary skill in the art and has a tap 15 for delivery of a dose of ice-cream through an outlet duct 16.

According to the invention the cylindrical chamber 11 is adapted to hold an "ice-cream cartridge". either replaceable (disposable) and recoverable and refillable, of matching shape. indicated overall by 17.

The ice-cream cartridge 17 consists of a stainless steel container 18 with an annular flange 19 proximal to its open side, on which flange the door 13 closes tightly, as shown in Figure 1.

Said container 18 has a bottom 20 with a central bore 21 which is in alignment with a bore 22 through a rear wall 23 of the chamber 11. opposite the door 13.

A stem-shaped thrust member 24 carried by a guide-frame 25 passes through the aligned bores 21. 22 and can be controlled to translate in the directions of the arrow F.

The control means for the thrust member 24 are not illustrated, in that they can be of any known kind, for instance a hydraulic cylinder, or other element providing mechanical thrust, suitable for the purpose.

The free end of the thrust member 24, in a freely releasable manner, engages a seat 26 of a piston 27 which can be translated inside the container 18 with a seal-and-scrape action on the lateral call thereof.

To this end said piston 27 is provided with a suitable perimetral gasket 28.

The numeral 29 indicates the amount of ice-cream held in the container 18, the ice-cream being of the traditional own-made kind prepared in other machines.

The container 18 is sealed by means of a removable or breakable seal 30.

As can be deduced from all the foregoing, the manner of operating of the ice-cream dispenser according to the invention is, briefly, as follows.

A cartridge 17 filled with ice-cream is placed into the refrigerating chamber 11 through the actuation of an automatic engagement between the thrust member 24 and the piston 27, after which the chamber is closed by means of the door 13.

A dose of ice-cream can for example be taken-off by turning on the tap 15 by hand; this will automatically cause advancement of the piston 27, which will stop when the tap 15 is turned off, or after a time interval set by a timer device which controls the functioning of the thrust member 24.

Alternatively, provision can be made for a fully automated functioning of the dispenser, on the basis of coin-or counter-operation.

A dispenser embodied according to the invention will advantageously comprise a plurality of chambers 11, preferably with at least the door 13 made of transparent and thermally insulated material, in which chambers differently flavoured ice-cream cartridges 17 will be respectively housed.

Instead of a plurality of chambers 11, provision can also be made for a single chamber, for instance one which has a parallelepiped shaped, that can hold several cartridges in side-by-side arrangement.

This makes it possible to offer high-quality own-made ice-cream through the intermediary of the sealed cartridges 17, which can be prepared in suitable production centres and supplied by these to the different sales points.

The sales points are thus relieved of the burden of preparing ice-cream, since they need only to be equipped with a dispenser according to the invention and a cold store cupboard for the temporary storage of spare ice-cream cartridges, unless the sales points itself is provided with a stand-by cold storage room.

The object of the invention mentioned in the introductory part of the description is thus achieved.

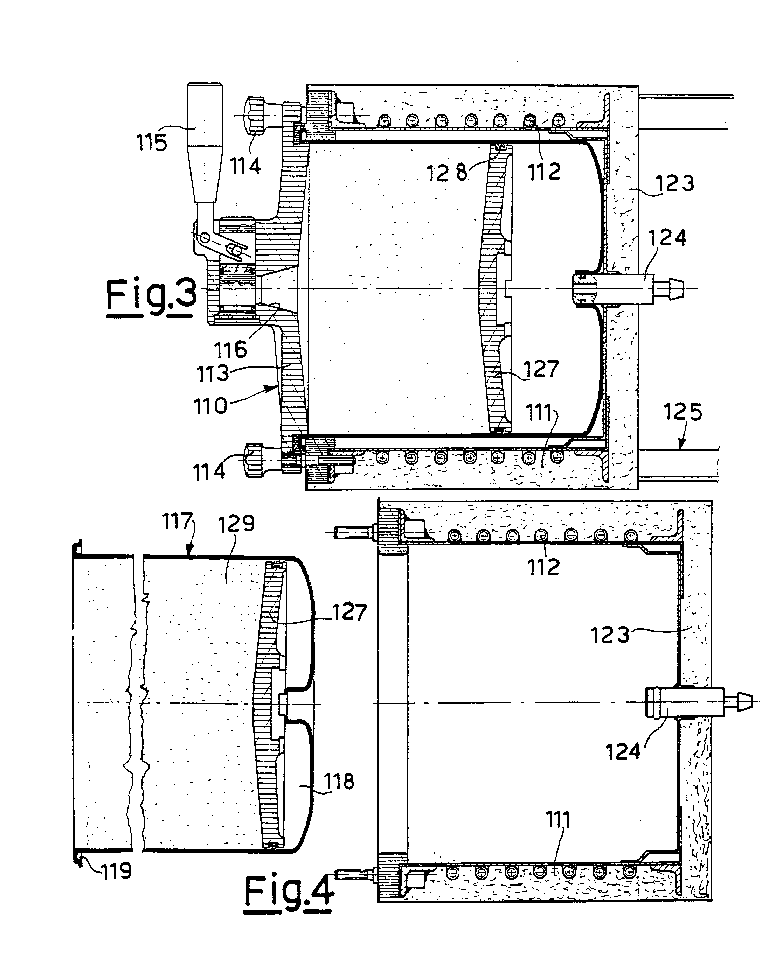

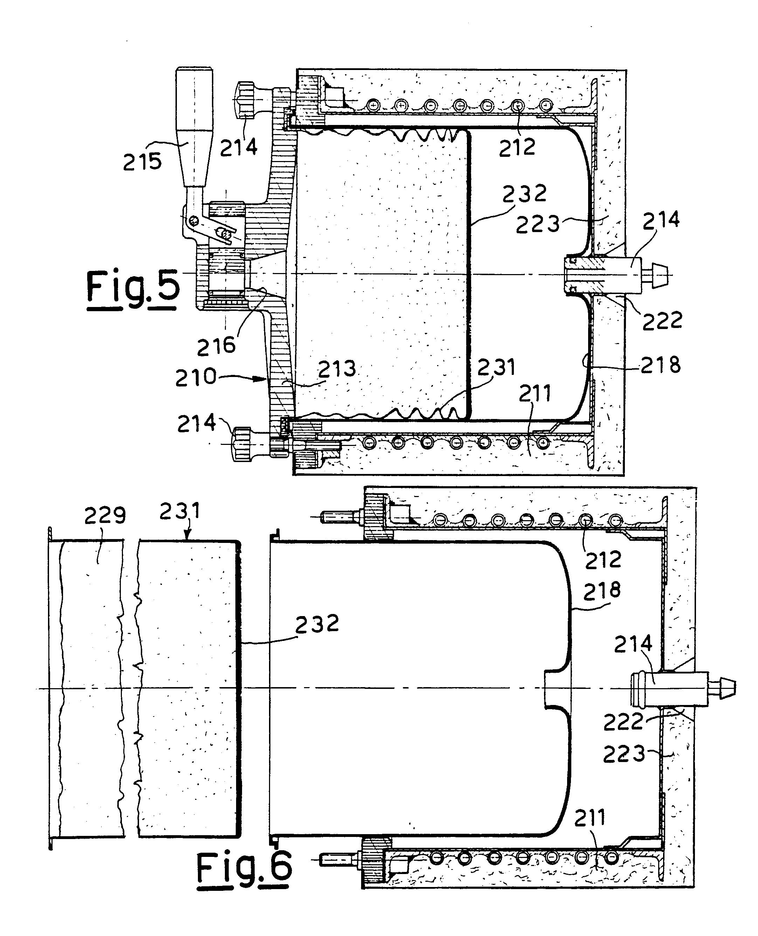

Figures 3 and 4 show a second form of embodiment of the invention in which the components identical with or similar to those shown in Figures 1 and 2 are indicated by the same reference numerals increased by 100.

This second embodiment differs from the first in that, instead of by a stem-shaped thrust member, thrust is imparted by a jet of purified compressed air introduced into the interior of the container 118 through a nozzle 124, which is connected to a suitable compressed air source (not shown).

As a result of the dimensions, there is in this way obtained a high thrust on the ice-cream cartridge even when the air pressure is low.

Figures 5 and 6 show a third form of embodiment of the invention in which the components identical or equivalent to those shown in Figures 1 and 2 are indicated by the same reference numerals increased by 200.

This embodiment also employs a jet of compressed air for delivery of the ice-cream, which, instead of being housed in the container 218 is contained within a disposable cartridge 231 constructed from deformable material and placed into the container 218 itself.

This is a highly practical embodiment in that it also lends itself to the dispensing of ice-cream manufactured in large production centres located a long distance away.

In this case, the container 218 does not call for special processing operations to ensure air-seal, which is assured by the deformable-material cartridge 231.

In addition, as the cartridge is deformable, its bulk is decreased by the pressure brought to bear by the air on its base and sides, so that the effect of the thrust is multiplied.

The base of the cartridge can be enlarged as at 232 in order to facilitate its correct deformation, preventing exaggerated bends from interfering with the total outflow of ice-cream.

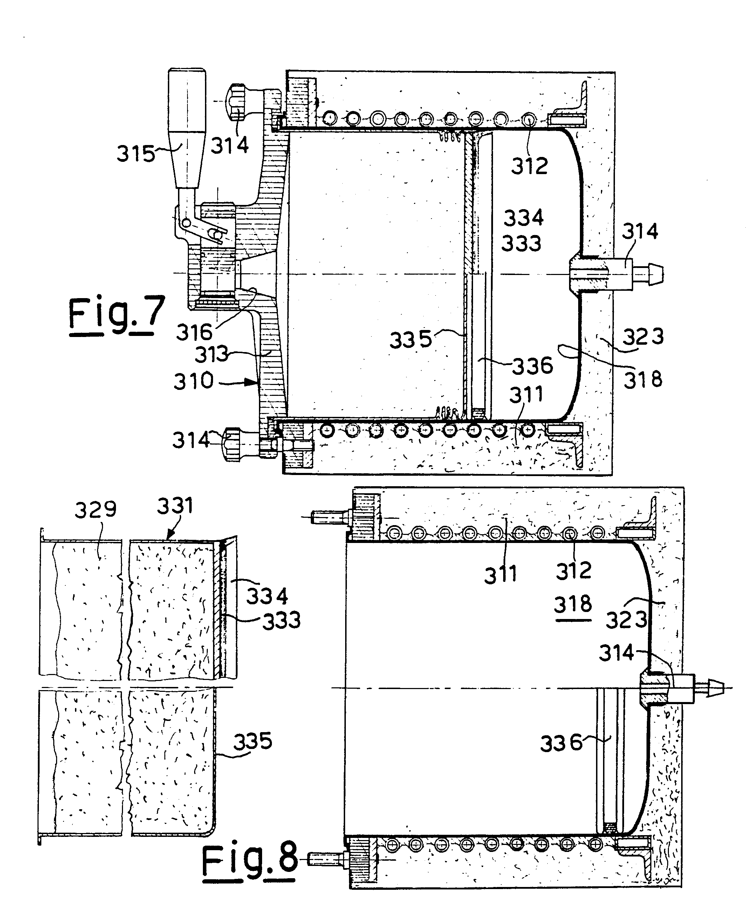

Figures 7 and 8 show a fourth form of embodiment of the invention in which the components identical with or similar to those shown in Figures 1 and 2 are indicated by the same reference numerals increased by 300.

Like the embodiment in Figures 5 and 6, this embodiment employs a disposable cartridge 331 constructed from a suitable deformable material.

This cartridge can have a rigid base 333 with gasket 334 solid with the former.

Alternatively, the cartridge can have a yieldable base 335 on which acts a piston 336 provided for within the container 318. which in this case is solid with the machine body.

Both the rigid base 333 and the separate piston 336 ensure that the disposable cartridge 331 has a regular movement and that thus its deformation is also regular.

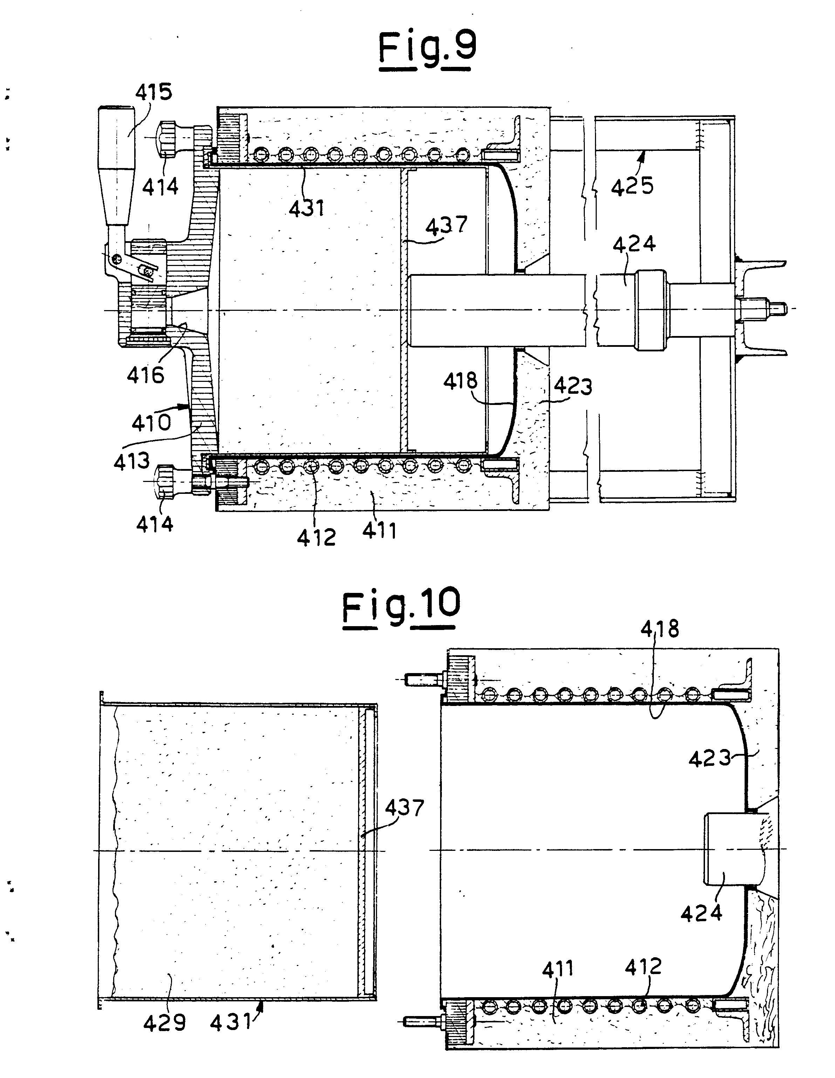

Figures 9 and 10 show a fifth form of embodiment of the invention in which the components identical with or similar to those shown in Figures 1 and 2 are indicated by the same reference numerals increased by 400.

As is the case with the one shown in Figures 7 and 8. this form of embodiment also provides for a fixed container 418. which is however adapted to receive a disposable cartridge 431 made of rigid material and provided with a movable base 437. which functions as extruder piston. on acts the stem-shaped thrust member 424.

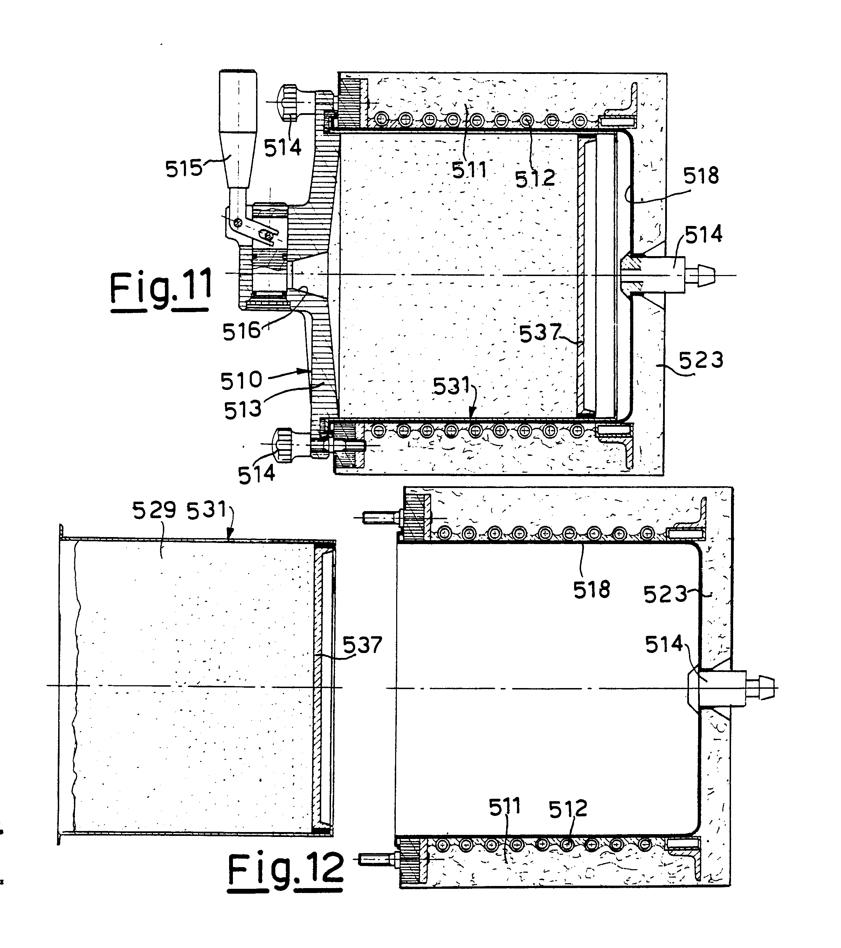

Figures 11 and 12 show a sixth form of embodiment of the invention in which the components identical with or similar to those shown in Figures 1 and 2 are indicated by the same reference numeral increased by 500.

This form of embodiment is comparable to the one shown in Figures 9 and 10. except that a jet of air fed through a nozzle 514 acts on the base 537 of the cartridge.

The movable base 537 is constructed so as to guarantee pressure-seal for the air that moves it along the shell of the cartridge 531 which is made of rigid material.

The cartridge 531 also supports the pressure required to extrude the ice-cream without deformation.

As stated heretofore. in all the forms of embodiment of the invention use is made of a transparent cover 513 which puts the quality of the ice-cream on show and promotes its sale.

If kept constant. the pressure on the ice-cream obviates electrical controls for operating the extruder: thus, in the present case, the outflow of ice-cream is controlled solely by the delivery tap.

However. in the case of pressures on the ice-cream that are not constant, it is necessary to control the extruder system electronically.

Pressure on the ice-cream is kept constant simply by means of a pressure regulator such as a pressure switch or other means.

Temperature regulation is assured by adjustable electronic thermostats which keep the ice-cream at its correct temperature.

## Claims

1) Ice-cream dispenser of the type comprising at least a refrigerated chamber (11) closed by a door (13) with a delivery tap (15). wherein the said chamber is adapted to house in a removable manner an ice-cream cartridge (17) holding an amount of ice-cream (29) on which act pressor means adapted to dispense a dose of ice-cream through the opening of said delivery tap (15).

2) Dispenser as described in claim 1. wherein said cartridge is recoverable and refillable.

3) Dispenser as described in claim 1. wherein said cartridge is disposable.

4) Dispenser as described in claim 1. wherein said cartridge (17) consists of a container (18) holding a certain amount of ice-cream (29) on which acts a piston (27) mounted within said container (18). which piston (27) can be coupled in a removable manner to a thrust member (24) which extends through said chamber (11) and said container (18).

5) Dispenser as described in claim 4. wherein the thrust member (24) consists of a nozzle (124) for delivering compressed air.

6) Dispenser as described in claim 1. wherein said ice-cream cartridge is a container (231) made of deformable material. on which said pressor means act.

7) Dispenser as described in claim 6, wherein said pressor means consist of a jet of compressed air acting on said container.

8) Dispenser as described in claim 6. wherein said pressor means consist of a piston thrust by a jet of compressed air to act on the base of said container.

9) Dispenser as described in claim 1. wherein said ice-cream cartridge is a container (431) made of rigid material and provided with a movable base on which said pressor means act.

10) Dispenser as described in claim 9. wherein said pressor means consist of a stem-shaped thrust member.

11) Dispenser as described in claim 9. wherein said pressor means consist of a jet of compressed air.

# Fig.1

# Fig.2

Fig.3

Fig.4

Fig.5

Fig.6

Fig.7

Fig.8

**Fig.9**

**Fig.10**

Fig.11

Fig.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 559 840 (R.L. ARTHUR) <br> * Figure 3; column 1, lines 33-40; column 2, line 52 - column 3, line 49; column 8, line 48 - column 9, line 17 * | 1-4,9, 10 | A 23 G 9/28 <br> B 65 D 85/78 <br> B 65 D 83/00 |
| X | GB-A- 992 262 (N. GAIETY) <br> * Figures; claim 1; page 1, line 51 - page 2, line 39 * | 1-3,5-8 ,11 | |
| A | US-A-3 790 038 (D.E. KIFER) <br> * Figures 1-6; column 1, lines 4-30; claim 1 * | 1-11 | |
| A | US-A-4 452 823 (J.M. CONWOLLY et al.) <br> * Column 7, lines 4-28; figure 4 * | 6 | |
| A | US-A-3 070 224 (W.H. ROBINSON et al.) | | |
| A | US-A-4 420 948 (D.H. SAVAGE) <br> * Column 4, lines 52-55; column 7, lines 30-62 * | 1-11 | |
| A | DE-C- 809 916 (K.H. STAUNAU) <br> * Page 2; figures 1,2 * | 1-11 | TECHNICAL FIELDS SEARCHED (Int. Cl.4) <br><br> B 65 D <br> A 23 G |
| A | US-A-4 437 589 (C. POTTER) | | |
| A | BE-A- 643 926 (UNILEVER) <br> & FR-A-1 386 722 | | |
| A | FR-A-1 525 674 (CHEM. DEVELOPMENT CORP.) <br> * Figure 1; page 1, column 1, paragraph 1 * | 6 | |
| A | GB-A- 732 434 (T. WALL & SONS) <br> * Figures 1,2; claims 1,15 * | 6 | |

-/-

The present search report has been drawn up for all claims

| Place of search | Date of completion of the search | Examiner |
|---|---|---|
| THE HAGUE | 04-01-1988 | GUYON R.H. |

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-2 716 385 (R.G. TARR) ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 04-01-1988 | GUYON R.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)